# EUROPÄISCHE PATENTSCHRIFT

(11) **EP 0 686 430 B1**
(45) Veröffentlichungstag und Bekanntmachung des Hinweises auf die Patenterteilung: **17.03.1999**
(21) Anmeldenummer: 95105338.8
(22) Anmeldetag: 08.04.1995
(51) Int. Cl.: B05B 7/14, B05B 12/08, G01F 1/74, B65G 53/66

(54) **Injektor-Fördervorrichtung zur pneumatischen Förderung von Pulver**
Injector for pneumatically transporting powder
Injecteur pour le transport pneumatique de poudre

(30) Priorität: 08.06.1994 DE 4419987
(43) Veröffentlichungstag der Anmeldung: 13.12.1995
(73) Patentinhaber: ITW Gema AG, 9015 St. Gallen (CH)
(72) Erfinder: Mauchle, Felix, CH-9030 Abtwil (CH)
(74) Vertreter: Vetter, Ewald Otto, Dipl.-Ing.

(56) Entgegenhaltungen:
- US-A- 4 544 306
- US-A- 5 186 388

## Beschreibung

Die Erfindung betrifft eine Injektor-Fördervorrichtung zur pneumatischen Förderung von Pulver, insbesondere pulverförmigem Beschichtungsmaterial, gemäß dem Oberbegriff von Anspruch 1.

Eine solche Fördervorrichtung ist aus der US-A-5 186 388 bekannt.

Aus der US-PS 4 747 731 ist eine Injektor-Fördervorrichtung zur pneumatischen Förderung von Pulver bekannt, welche aus einem Pulverbehälter fluidisiertes Pulver über eine horizontale Kanalanordnung entnimmt. Die horizontale Kanalanordnung besteht nacheinander aus einer Sensordüse, einem ihr stromabwärts axial gegenüberliegenden Detektorkanal, einem relativ zum Detektorkanal im Querschnitt erweiterten Kanalauslaß, einem Quetschventil, einer Injektordüse axial in einem Kanalabschnitt, welcher einen größeren Durchmesser als die Düse hat, einem der Injektordüse stromabwärts axial gegenüberliegenden Diffusorkanal und einem sich stromabwärts daran anschließenden Transportkanal. Ein Pulvereinlaß mündet innerhalb des Pulverbehälters von unten nach oben in einen Zwischenraum zwischen der Sensordüse und dem Detektorkanal, so daß aus dem Pulverbehälter in den Einlaß aufsteigendes fluidisiertes Pulver von einem aus der Sensordüse ausströmenden Trägergas erfaßt und durch den Detektorkanal hindurch zur Injektordüse gefördert wird. Aus der Injektordüse strömt Treibgas in den stromabwärts von ihr angeordneten Diffusorkanal und fördert das Gemisch aus Pulver und Trägergas durch die Transportleitung zu einem Verbraucher. Stromabwärts des Diffusorkanals mündet ein Gaseinstellkanal in die Transportleitung, über welchen Zusatzträgergas dem Pulver-Luft-Strom zugeführt werden kann. Durch das Zusatzträgergas kann die Strömungsgeschwindigkeit des Pulver-Luftgemisches verändert werden. Durch die horizontale Lage des Detektorkanals würde sich in ihm Pulver ablagern, wenn das Pulver nicht von dem Trägergas der Sensordüse durch den Detektorkanal hindurchgetrieben würde. Die zur Förderung einer bestimmten Pulvermenge pro Zeiteinheit erforderliche Gasmenge besteht deshalb aus der Summe des Trägergases der Sensordüse und des Treibgases der Injektordüse. Zur Messung der Strömungsmenge des Trägergases mündet in die Sensordüse und in den Auslaß des Detektorkanals je ein Drosselkanal zur Zufuhr einer kleinen Gasmenge. Die Drücke in den Drosselkanälen werden durch ein Differenzdruckmeßgerät gemessen. Aus dem Differenzdruck wird die Strömungsmenge des Trägergases bestimmt. Ferner ist ein Membranventil vorgesehen, welches die Zufuhr von Treibgas zur Injektordüse regelt. Stabartige Tauchpumpen mit einem Injektor als Pumpe am oberen Ende sind aus der EP 0 184 994 B2 und der DE-OS 40 12 190 A1 bekannt. Die Anordnung des Injektors am unteren Ende ist aus der DE-OS 41 14 097 A1 bekannt.

Bei der pneumatischen Förderung von Pulver, insbesondere pulverförmiges Beschichtungsmaterial zu einer Sprühdüse für die Sprühbeschichtung von Gegenständen, ist die pro Zeiteinheit geförderte Pulvermenge und die im Pulverstrom insgesamt enthaltene Gasmenge maßgebend. Die einzelnen Gas- oder Luftzufuhrmengen müssen insgesamt der gewünschten Gesamtgasmenge entsprechen. Die einzelnen Gas- oder Luftmengen können auf einfache Weise beispielsweise durch Strömungsmeßgeräte gemessen werden, bevor sie sich mit Pulver vermischen. Ein Problem ist jedoch die genaue Messung der pro Zeiteinheit geförderten Pulvermenge.

Durch die Erfindung soll die Aufgabe gelöst werden, eine Möglichkeit zu schaffen, durch welche auf einfache Weise die pro Zeiteinheit geförderte Pulvermenge genau und kontinuierlich gemessen werden kann, ohne starke Druckschwankungen im Pulveransaugkanal.

Diese Aufgabe wird gemäß der Erfindung durch die kennzeichnenden Merkmale von Anspruch 1 gelöst.

Die Erfindung beruht auf der Erkenntnis des Erfinders, daß das vom Injektor zum Ansaugen des Pulvers erzeugte Vakuum proportional zu der geförderten Pulvermenge pro Zeiteinheit ist. Das vom Injektor erzeugte Vakuum oder Unterdruck ist relativ klein. Es gibt noch keine Geräte, mit welcher dieses Vakuum oder dieser Unterdruck kostengünstig und kontinuierlich gemessen werden kann. Der Erfinder schlägt deshalb vor, durch den vom Injektor erzeugten Unterdruck über einen Drosselkanal Luft von der Außenatmosphäre anzusaugen und die pro Zeiteinheit angesaugte Luftmenge zu messen. Die Luftmenge kann durch ein handelsübliches Strömungsmeßgerät oder ein Druckabfallmeßgerät gemessen werden, welches den in der Drosselleitung entstehenden Druckabfall der angesaugten Luft mißt. Die Durchflußmenge oder der Druckabfall ist direkt proportional zu dem vom Injektor erzeugten Vakuum oder Unterdruck. Dieses Vakuum oder Unterdruck ist proportional zu der geförderten Pulvermenge pro Zeiteinheit. Die Drosselleitung wird im folgenden als Meßkanal bezeichnet.

Die gemäß der Erfindung vorgeschlagene Messung der pro Zeiteinheit geförderten Pulvermenge arbeitet auch dann genau, wenn in der Pulver-Luftleitung Änderungen des Strömungswiderstandes beispielsweise durch Pulverablagerungen oder durch Leitungsknicke entstehen. Eine Erhöhung des Strömungswiderstandes hat eine entsprechende Druckerhöhung im Unterdruckbereich des Injektors und damit eine geringere Menge an Luft zur Folge, welche von der Außenatmosphäre über die Meßleitung angesaugt wird.

Im Pulveransaugkanal, über welchen der Injektor Pulver aus einem Pulverbehälter ansaugt, können ebenfalls Druckschwankungen durch sich verändernde Pulverkonzentrationen und durch eine sich verändernde Pulverhöhe im Pulverbehälter entstehen, aus welchem Pulver über den Pulveransaugkanal zum Injektor angesaugt wird. Zur Stabilisierung der Strömung im Pulveransaugkanal ist gemäß der Erfindung am stromaufwärtigen Anfang des Pulveransaugkanals ein Drucklufteinlaß angeordnet, welcher eine geringe Menge von Ausgleichsluft axial in das stromaufwärtige Ende des Pulveransaugkanals bläst. Dadurch wird die Amplitude von Druckschwankungen im Pulveransaugkanal verkleinert und die Schwankungsfrequenz erhöht. Dies hat kürzere Regelzeiten zur Folge. Zur Reduzierung des Einflusses von schwankender Pulverhöhe im Pulverbehälter auf den Druck im Pulveransaugkanal ist der Einlaß des Pulveransaugkanals durch mindestens eine seitliche Öffnung gebildet, welche quer zum Pulveransaugkanal in eine Kammer mündet, die zwischen dem Drucklufteinlaß für Ausgleichsluft und dem Pulveransaugkanal gebildet ist und einen größeren Querschnitt als der Pulveransaugkanal hat. Dadurch kann der Drucklufteinlaß, falls gewünscht, durch Injektorwirkung Unterdruck erzeugen und dadurch die Förderung des Pulvers unterstützen.

Weitere Merkmale der Erfindung sind in den Unteransprüchen enthalten.

Die Erfindung wird im folgenden mit Bezug auf die Zeichnungen anhand einer bevorzugten Ausführungsform als Beispiel beschrieben. In den Zeichnungen zeigen
- Fig. 1: schematisch einen Axialschnitt durch eine Injektor-Fördervorrichtung nach der Erfindung,
- Fig. 2-5: schematisch einen Injektor und den oberen Kanalabschnitt eines an seine Unterdruckkammer strömungsmäßig angeschlossenen vertikal angeordneten Pulveransaugkanals bei verschiedenen Pulverkonzentrationen im Pulveransaugkanal der Injektor-Fördervorrichtung nach Fig. 1.

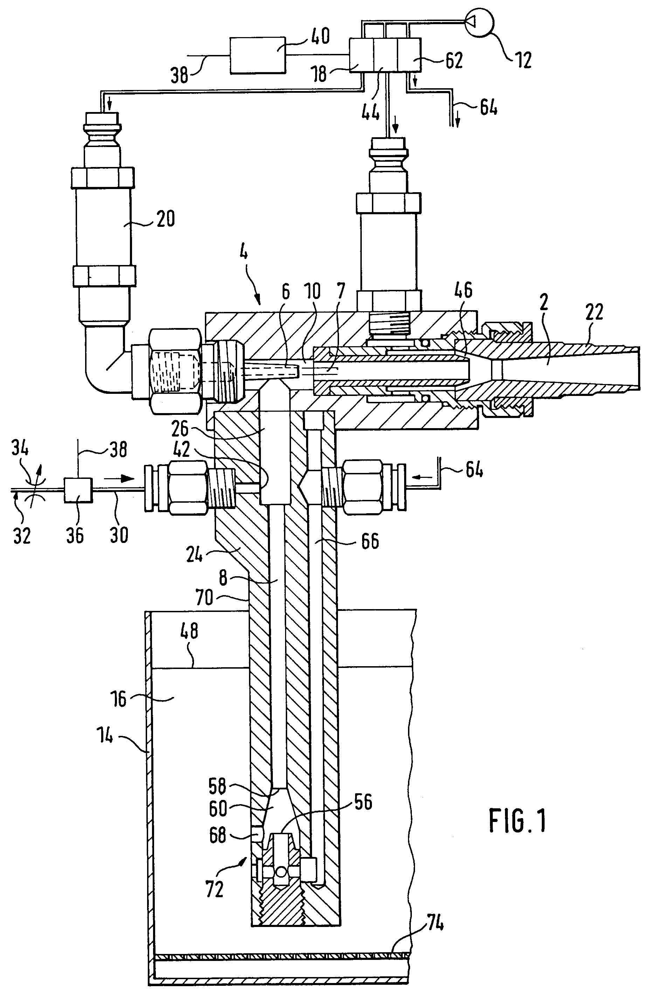

Die in Fig. 1 dargestellte Injektor-Fördervorrichtung nach der Erfindung zur pneumatischen Förderung von Pulver, insbesondere pulverförmigem Beschichtungsmaterial, enthält einen Pulver-Luft-Kanal 2, einen Injektor 4 mit einer im wesentlichen axial in den Pulver-Luft-Kanal 2 gerichteten Injektordüse 6, und einen Pulveransaugkanal 8, welcher an eine Unterdruckkammer 10 des Injektors 4 strömungsmäßig angeschlossen ist. Ein von der Injektordüse 6 in den Pulver-Luft-Kanal 2 getriebener Förderluftstrahl 7 einer Druckluftquelle 12 saugt aus einem Pulverbehälter 14 Pulver 16 durch den Pulveransaugkanal 8 in die Unterdruckkammer 10, in welcher sich das Pulver mit dem Förderluftstrahl vermischt und dann zusammen mit ihm durch den Pulver-Luft-Kanal 2 strömt. Die Druckluftquelle 12 ist über einen Druckregler 18 mittels einer Druckluftleitung 20 strömungsmäßig an die Injektordüse 6 angeschlossen.

Der in Fig. 1 dargestellte stromabwärtige Endteil 22 des Pulver-Luft-Kanals 2 kann als Zerstäuberdüse ausgebildet oder über einen Schlauch mit einer Sprühvorrichtung zum Sprühen des Pulvers auf einen zu beschichtenden Gegenstand versehen sein.

Der Pulveransaugkanal 8 erstreckt sich vertikal in Längsrichtung durch ein Tauchrohr 24, welches vertikal angeordnet und von oben nach unten in das Pulver 16 des Pulverbehälters 14 eingetaucht ist. Ein oberer Endabschnitt 26 des Pulveransaugkanals 8 hat relativ zum stromaufwärtigen Kanalabschnitt einen erweiterten Strömungsquerschnitt, welcher an die Unterdruckkammer 10 angeschlossen ist und zusammen mit diesem einen Unterdruckbereich bildet, in welchem der Förderluftstrahl 7 der Injektordüse 6 einen im wesentlichen homogenen Unterdruck oder Vakuum erzeugt. Der vom Förderluftstrahl 7 erzeugte Unterdruck erstreckt sich jedoch mit unterschiedlicher Stärke durch den gesamten Pulveransaugkanal 8 hindurch. Der Unterdruckbereich 10, 26 ist mit der Außenatmosphäre 32 durch einen Meßkanal 30 strömungsmäßig verbunden oder verbindbar, welcher mit einer einstellbaren Strömungsdrossel 34 versehen ist. Der im Unterdruck 10, 26 herrschende Unterdruck oder Vakuum saugt über den Meßkanal 30 stark gedrosselt durch die Strömungsdrossel 34 Luft aus der Außenatmosphäre 32 an. Der Meßkanal 30 ist mit einer Meßvorrichtung 36 versehen, welche in Abhängigkeit von der durch den Meßkanal 30 von der Außenatmosphäre 32 in den Unterdruckbereich 10, 26 strömenden Luft auf einer Signalleitung 38 ein Meßsignal erzeugt, welches ein Maß für die durch den Meßkanal 30 pro Zeiteinheit strömende Luft und damit auch ein Maß für die durch den Pulver-Luft-Kanal 2 pro Zeiteinheit geförderte Pulvermenge ist. Das Meßsignal kann ein elektrisches, pneumatisches oder hydraulisches Signal sein und entsprechend kann auch seine Signalleitung 38 eine elektrische, pneumatische oder hydraulische Leitung sein, welche mit einer Regelvorrichtung 40 funktionsmäßig verbunden ist. Das stromabwärtige Ende 42 des Meßkanal 30 ist vorzugsweise an die Unterdruckkammer 10 strömungsmäßig angeschlossen. Bei der Ausführungsform nach Fig. 1 ist es an den stromabwärtigen Endabschnitt 26 des Pulveransaugkanals 8 strömungsmäßig angeschlossen, wobei dieser Endabschnitt einen so großen Querschnitt hat, daß in ihm im wesentlichen der gleiche Unterdruck oder das gleiche Vakuum herrscht wie in der Unterdruckkammer 10, so daß dieser Endabschnitt 26 als Teil der Unterdruckkammer 10 angesehen werden kann.

Die Meßvorrichtung 36 ist vorzugsweise ein Strömungsmeßgerät, welches in Abhängigkeit von der pro Zeiteinheit durch den Meßkanal 30 strömenden Außenluftmenge das Meßsignal erzeugt. Gemäß einer weiteren bevorzugten Ausführungsform ist die Meßvorrichtung 36 eine Druckabfall-Meßvorrichtung, welche in Abhängigkeit von einem Druckabfall der durch den Meßkanal 30 strömenden Außenluft das Meßsignal auf der Signalleitung 38 erzeugt. Zur Messung des Druckabfalles braucht nur an einer Meßstelle stromabwärts der Strömungsdrossel 34 der Luftdruck im Meßkanal 30 gemessen zu werden, da dieser mit dem Druck der Außenluft an einem Außenatmosphären-Einlaß 32 in Relation gesetzt werden kann. Wenn der Meßkanal 30 einen kapillarartig engen Querschnitt hat, wird keine zusätzliche Strömungsdrossel 34 benötigt. In diesem Falle kann in gleicher Weise im Meßkanal 30 stromabwärts seines Außenatmosphären-Einlasses 32 ein Druckabfall relativ zum Druck der Außenatmosphäre gemessen werden. Für die Funktion des Meßkanals 30 ist es lediglich erforderlich, daß die Außenatmosphäre gedrosselt mit der Unterdruckkammer 10 in Strömungsverbindung steht, damit der Unterdruck in der Unterdruckkammer 10 durch die Außenatmosphäre nicht nachteilig reduziert oder beeinflußt wird.

Für die Beschichtung eines Gegenstandes mit Pulver, aber auch für andere Anwendungen, ist die pro Zeiteinheit geförderte Pulvermenge eine wichtige Betriebsgröße, da hiervon beispielsweise die auf einen Gegenstand aufgetragene Schichtdicke abhängig ist. Ein weiteres Kriterium ist die pro Zeiteinheit geförderte Gesamtluftmenge, welche zusammen mit dem Pulver durch die Pulver-Luft-Leitung 2 gefördert wird. Dabei ist zu berücksichtigen, daß für jede Pulvermenge eine bestimmte Menge Förderluft von der Injektordüse 6 benötigt wird, um ein der Pulvermenge entsprechendes Vakuum in der Unterdruckkammer 10 zu erzeugen, durch welches Pulver 16 aus dem Pulverbehälter 14 angesaugt wird. Wenn diese Luftmenge kleiner ist als die Luftmenge, welche erforderlich ist, um das Pulver durch den Pulver-Luft-Kanal 2 zu fördern, ohne daß in ihm Pulverablagerungen entstehen, dann muß zusätzliche Luft hinzugefügt werden, um die Strömungsgeschwindigkeit im Pulver-Luft-Kanal 2 zu erhöhen. Da diese zusätzliche Luft das Vakuum oder den Unterdruck in der Unterdruckkammer 10 möglichst wenig oder nicht beeinflussen soll, weil sonst sich die pro Zeiteinheit geförderte Pulvermenge ändert, wird die zusätzliche Luft von der Druckluftquelle 12 über einen zweiten Druckregler 44 über eine Zusatzluftdüse 46 stromabwärts des Injektors 4 in den stromaufwärtigen Anfangsabschnitt des Pulver-Luft-Kanals 2 geblasen. Die Zusatzluftdüse 46 ist vorzugsweise entsprechend Fig. 1 eine Ringschlitzdüse, welche den Pulver-Luft-Kanal 2 konzentrisch umgibt und in Strömungsrichtung des Pulvers schräg in ihn mündet.

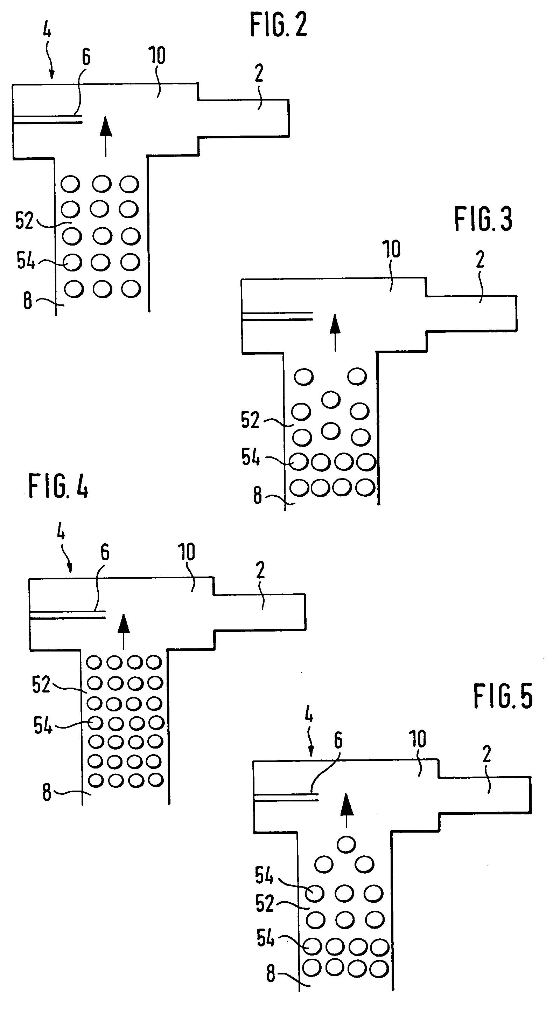

Das in der Unterdruckkammer 10 herrschende Vakuum oder Unterdruck ist sehr unkonstant und schwankt selbst dann, wenn die Förderluftrate der Injektordüse 6 und die Zusatzluftrate der Zusatzluftdüse 46 sowie das Pulverniveau 48 im Pulverbehälter 14 konstant gehalten werden. Solche unkontrollierten Schwankungen des Unterdruckes in der Unterdruckkammer 10 führen in unerwünschterweise auch zu Schwankungen der pro Zeiteinheit geförderten Pulvermenge im Pulver-Luft-Kanal 2. Die Ursachen der Vakuumschwankungen in der Unterdruckkammer 10 werden im folgenden mit Bezug auf die Fig. 2 bis 5 beschrieben, in welchen der Injektor 4 und der Pulveransaugkanal 8 schematisch dargestellt sind. Die Fig. 2 bis 5 stellen in aufeinanderfolgenden Zeitabschnitten jeweils entstehende Betriebssituationen dar. Bei dem in Fig. 2 dargestellten ersten Zeitabschnitt ist das Pulver-Luft-Gemisch 52 im Pulveransaugkanal 8 homogen. Das vom Injektor 4 in der Unterdruckkammer 10 erzeugte Vakuum saugt einen konstanten Luftvolumenstrom vom Pulverbehälter 14 durch die im Pulveransaugkanal 8 vorhandene Pulversäule an, welche durch Pulverpartikel 54 schematisch dargestellt ist. Hierbei ist der angesaugte Luftvolumenstrom konstant und das Vakuum in der Unterdruckkammer 10 ist ebenfalls konstant.

Bei dem in Fig. 3 dargestellten zweiten Zeitabschnitt saugt das in der Unterdruckkammer 10 des Injektors 4 vorhandene Vakuum einen großen Teil der im Pulveransaugkanal 8 vorhandenen Luft ab, wobei das Vakuum in der Unterdruckkammer 10 sich verringert, d. h. der Druck in ihr steigt. Dies bedeutet, daß der aus dem Pulveransaugkanal 8 abgesaugte Luftvolumenstrom ansteigt und das Vakuum in der Unterdruckkammer 10 kleiner wird. Dabei verdichten sich die im Pulveransaugrohr 8 verbleibenden Pulverpartikel 54.

Bei dem in Fig. 4 dargestellten dritten Zeitabschnitt haben sich die Pulverpartikel 54 im Pulveransaugrohr 8 stark verdichtet und sie lassen nur noch einen kleinen Luftvolumenstrom vom Pulverbehälter 14 durch die Pulversäule 52 im Pulveransaugkanal 8 nach oben strömen. Durch diesen Effekt steigt jetzt schlagartig das Vakuum in der Unterdruckkammer 10 wieder an. Während diesem dritten Zeitabschnitt wird somit der Luftvolumenstrom kleiner und das Injektorvakuum in der Unterdruckkammer 10 wird größer.

Bei dem in Fig. 5 gezeigten vierten Zeitabschnitt hat sich in der Unterdruckkammer 10 des Injektors 4 so lange ein Vakuum aufgebaut, bis es die verdichteten Pulverpartikel 54 im Pulveransaugkanal 8 auseinanderreißen konnte. Dadurch sinkt jetzt der Widerstand für den Luftvolumenstrom im Pulveransaugkanal 8 ab und das Vakuum in der Unterdruckkammer 10 verkleinert sich wieder. Während dieses vierten Zeitabschnittes wird somit der Luftvolumenstrom im Pulveransaugkanal 8 wieder größer und das Vakuum in der Unterdruckkammer 10 wird wieder kleiner.

Diese Schwankungen beeinträchtigen das Meßergebnis des Meßkanals 30 und damit auch die Regelung der Zufuhr von Fördergas und Zusatzgas. Zur Reduzierung dieses Nachteils ist gemäß der Erfindung am stromaufwärtigen Anfang ein Ausgleichsluft-Einlaß 56 in Form einer zweiten Injektordüse angeordnet, welche mit kleinem Abstand gegenüber dem stromaufwärtigen Anfang 58 axial angeordnet ist und durch eine dazwischen gebildete zweite Unterdruckkammer 60 Ausgleichsluft axial in das stromaufwärtige Ende 58 des Pulveransaugkanals 8 bläst. Die Ausgleichsluft wird der zweiten Zerstäuberdüse von der Druckluftquelle 12 über einen dritten Druckregler 62 und eine Druckluftleitung 64 über einen Ausgleichsluftkanal 66 zugeführt, welcher parallel zum Pulveransaugkanal 8 sich erstreckt. Der Pulveransaugkanal 8 und der Ausgleichsluftkanal 66 befinden sich achsparallel in dem Tauchrohr 24, in dessen unterem Endabschnitt auch die zweite Injektordüse 56 angeordnet ist. Der Pulvereinlaß für den Pulveransaugkanal 8 ist durch einen oder mehrere Pulvereinlaßöffnungen 68 gebildet, welche quer, beispielsweise radial, durch das Tauchrohr 24 hindurch die Tauchrohraußenfläche 70 und damit das im Pulverbehälter 14 befindliche Pulver 16 mit der zweiten Unterdruckkammer 60 des zweiten Injektors 72 strömungsmäßig verbinden, welch letzterer durch den Ausgleichsluft-Einlaß und die zweite Unterdruckkammer 60 gebildet ist.

Die Regelvorrichtung 40 regelt in Abhängigkeit von dem Meßsignal der Meßleitung 38 über die Druckregler 18, 44 und 62 die Zufuhr der Förderluft, der Zusatzluft und der Ausgleichsluft.

Der Pulverbehälter 14 ist vorzugsweise so ausgebildet, daß das in ihm enthaltene Pulver 16 in einem Luftstrom schwebt, dessen Luft durch einen perforierten Behälterboden 74 in das Behälterinnere strömt. Durch diesen "fluidisierten Zustand" des Pulvers 16 im Behälter 14 hat das Pulver 16 Fließeigenschaften ähnlich wie Luft oder eine Flüssigkeit. Von dem Ausgleichsluft-Einlaß 56 wird eine viel kleinere Menge Luft pro Zeiteinheit in den Pulverstrom eingebracht als mit der ersten Injektordüse 6. Die Ausgleichsluft des Ausgleichsluft-Einlasses 56 kann zwar, braucht jedoch nicht in der zweiten Unterdruckkammer 60 Pulver aus dem Pulverbehälter 14 ansaugen. Die Ausgleichsluft wird durch diesen Einlaß 56 mit einer kleinen konstanten Menge pro Zeiteinheit zugeführt und hat dadurch eine stabilisierende Wirkung auf die vorstehend beschriebenen Druckschwankungen im Pulveransaugkanal 8. Die Ausgleichsluft des Ausgleichsluft-Einlasses 56, welche in der beschriebenen Weise als Injektordüse ausgebildet sein kann, macht die genannten Schwankungen hochfrequenter (kürzer und schneller) und bezüglich ihrer Amplitude kleiner. Dadurch werden die Reglereinstellzeiten der Regelvorrichtung 40, welche versucht die genannten Schwankungen auszugleichen, wesentlich kürzer. Bei Versuchen konnten die Regeleinstellzeiten auf ein Drittel verkürzt werden.

## Patentansprüche

1. Injektor-Fördervorrichtung zur pneumatischen Förderung von Pulver, insbesondere pulverförmigem Beschichtungsmaterial, welche einen Pulver-Luft-Kanal (2), einen Injektor (4) mit einer im wesentlichen axial in den Pulver-Luft-Kanal (2) gerichteten Injektordüse (6) und einen Pulveransaugkanal (8) aufweist, welcher an eine Unterdruckkammer (10) des Injektors (4) strömungsmäßig angeschlossen ist, wobei ein von der Injektordüse (6) in den Pulver-Luft-Kanal (2) getriebener Förderluftstrahl (7) durch die Unterdruckkammer (10) und den Pulveransaugkanal (8) hindurch Pulver (16) aus einem Pulverbehälter (14) absaugt und durch den Pulver-Luft-Kanal (2) fördert,
**dadurch gekennzeichnet,**
daß der Unterdruckbereich (10,26), welcher durch die Unterdruckkammer (10) und den an sie angeschlossenen Endabschnitt (26) des Pulveransaugkanals (8) gebildet ist, mit der Außenatmosphäre durch einen Meßkanal (30) verbunden oder verbindbar ist, welcher als Strömungsdrossel ausgebildet ist und über welchen der Unterdruck des Unterdruckbereiches (10,26) Luft aus der Außenatmosphäre (32) stark gedrosselt ansaugen kann, und daß der Meßkanal (30) mit einer Meßvorrichtung (36) versehen ist, welche in Abhängigkeit von der durch den Meßkanal (30) strömenden Außenatmosphärenluft ein Meßsignal (38) erzeugt, welches ein Maß für die geförderte Pulvermenge pro Zeiteinheit ist, und
daß am stromaufwärtigen Anfang (58) des Pulveransaugkanals (8) ein Ausgleichsluft-Einlaß (56) vorgesehen ist, über welchen dem Pulveransaugkanal (8) Druckluft zum Ausgleich von Druckschwankungen zugeführt wird, welche im Pulveransaugkanal (8) während des Betriebes entstehen, wobei die pro Zeiteinheit zugeführte Menge an Ausgleichsluft wesentlich kleiner ist als die pro Zeiteinheit zugeführte Menge an Förderluft des Injektors (4).

2. Injektor-Fördervorrichtung nach Anspruch 1,
**dadurch gekennzeichnet**,
daß die Meßvorrichtung (36) ein Strömungsmeßgerät ist, welches in Abhängigkeit von der pro Zeiteinheit durch den Meßkanal (30) strömenden Luftmenge das Meßsignal (38) erzeugt.

3. Injektor-Fördervorrichtung nach Anspruch 1,
**dadurch gekennzeichnet,**
daß die Meßvorrichtung (36) eine Druckabfall-Meßvorrichtung ist, welche in Abhängigkeit von einem Druckabfall im Meßkanal (30) das Meßsignal (38) erzeugt.

4. Injektor-Fördervorrichtung nach einem der vorhergehenden Ansprüche,
**dadurch gekennzeichnet**,
daß der Meßkanal (30) an den stromabwärtigen Endabschnitt (26) des Pulverabsaugkanals (8) angeschlossen ist, welcher an die Unterdruckkammer (10) strömungsmäßig angeschlossen ist und einen so großen Strömungsquerschnitt hat, daß in ihm im wesentlichen der gleiche Unterdruck wie in der Unterdruckkammer (10) herrscht.

5. Injektor-Fördervorrichtung nach einem der vorhergehenden Ansprüche,
**dadurch gekennzeichnet,**
daß der Ausgleichsluft-Einlaß (56) durch eine zweite Injektordüse gebildet ist, welche in den stromaufwärtigen Anfang (58) des Pulveransaugkanals (8) axial stromabwärts gerichet ist und welcher eine Unterdruckkammer (60) zugeordnet ist, in welcher der Ausgleichsluftstrom ein kleines Vakuum erzeugt, durch welches ein Entweichen von Ausgleichsluft an dem stromaufwärtigen Anfang (58) des Pulveransaugkanals (8) vorbei verhindert wird.

6. Injektor-Fördervorrichtung nach einem der vorhergehenden Ansprüche,
**dadurch gekennzeichnet,**
daß der stromaufwärtige Anfang (58) des Pulveransaugkanals (8) mit mindestens einer quer zuihm verlaufenden Pulvereinlaßöffnung (68) versehen ist.

7. Injektor-Fördervorrichtung nach Anspruch 6,
**dadurch gekennzeichnet**,
daß die Pulvereinlaßöffnung (68) und der stromaufwärtige Anfang (58) des Pulveransaugkanals (8) über eine Kammer (60) strömungsmäßig miteinander verbunden sind, welche zwischen dem Ausgleichsluft-Einlaß (56) für die Ausgleichsluft und dem Pulveransaugkanal (8) gebildet ist.

8. Injektor-Fördervorrichtung nach einem der vorhergehenden Ansprüche,
**dadurch gekennzeichnet,**
daß der Pulveransaugkanal (8) in einem Tauchrohr (24) in dessen Längsrichtung gebildet ist, welches in einen Pulverbehälter (14) eingetaucht werden kann und an seinem oberen Ende mit dem Injektor (4) versehen ist.

## Claims

1. An injector conveyor apparatus for pneumatically conveying powder, in particular coating material in powder form, which has a powder-air passage (2), an injector (4) with an injector nozzle (6) directed substantially axially into the powder-air passage (2), and a powder suction intake passage (8) which is connected in flow relationship to a reduced-pressure chamber (10) of the injector (4), wherein a conveyor air jet (7) driven into the powder-air passage (2) by the injector nozzle (6) sucks powder (16) out of a powder container (14) through the reduced-pressure chamber (10) and the powder suction intake passage (8) and conveys it through the powder-air passage (2), characterised in that the reduced-pressure region (10, 26) which is formed by the reduced-pressure chamber (10) and the end portion (26) connected thereto of the powder suction intake passage (8) is connected or connectable to the outside atmosphere by a measurement passage (30) which is in the form of a flow throttle and by way of which the reduced pressure of the reduced-pressure region (10, 26) can suck air out of the outside atmosphere (32) in a strongly throttled fashion and that the measurement passage (30) is provided with a measurement device (36) which in dependence on the outside atmosphere air flowing through the measurement passage (30) produces a measurement signal (38) which is a measurement for the amount of powder conveyed per unit of time, and that provided at the upstream beginning (58) of the powder suction intake passage (8) is a compensating inlet (56) by way of which compressed air is fed to the powder suction intake passage (8) to compensate for pressure fluctuations which occur in the powder suction intake passage (8) during operation, wherein the amount of compensating air fed per unit of time is substantially smaller than the amount of conveyor air of the injector (4) which is fed per unit of time.

2. An injector conveyor apparatus according to claim 1 characterised in that the measurement device (36) is a flow measurement device which produces the measurement signal (38) in dependence on the amount of air flowing per unit of time through the measurement passage (30).

3. An injector conveyor apparatus according to claim 1 characterised in that the measurement device (36) is a pressure drop measurement device which produces the measurement signal (38) in dependence on a pressure drop in the measurement passage (30).

4. An injector conveyor apparatus according to one of the preceding claims characterised in that the measurement passage (30) is connected to the downstream end portion (26) of the powder suction intake passage (8) which is connected in flow relationship to the reduced-pressure chamber (10) and which is of such a large flow cross-section that substantially the same reduced pressure prevails therein as in the reduced-pressure chamber (10).

5. An injector conveyor apparatus according to one of the preceding claims characterised in that the compensating air inlet (56) is formed by a second injector nozzle which is directed axially downstream into the upstream beginning (58) of the powder suction intake passage (8) and with which there is associated a reduced-pressure chamber (60) in which the compensating air flow produces a slight vacuum by which escape of compensating air past the upstream beginning (58) of the powder suction intake passage (8) is prevented.

6. An injector conveyor apparatus according to one of the preceding claims characterised in that the upstream beginning (58) of the powder suction intake passage (8) is provided with at least one powder inlet opening (68) extending transversely with respect thereto.

7. An injector conveyor apparatus according to claim 6 characterised in that the powder inlet opening (68) and the upstream beginning (58) of the powder suction intake passage (8) are in flow communication with each other by way of a chamber (60) which is formed between the compensating air inlet (56) for the compensating air and the powder suction intake passage (8).

8. An injector conveyor apparatus according to one of the preceding claims characterised in that the powder suction intake passage (8) is formed in a dip tube (24) in the longitudinal direction thereof, which can be dipped into a powder container (14) and which is provided at its upper end with theinjector (4).

## Revendications

1. Dispositif d'alimentation d'injecteur pour refouler pneumatiquement de la poudre, en particulier un matériau de revêtement pulvérulent, comprenant un canal de poudre-air (2), un injecteur (4) avec une buse d'injection (6) orientée sensiblement axialement dans le canal de mélange poudre-air (2), et un canal d'aspiration de poudre (8) en communication d'écoulement avec une chambre de dépression (10) de l'injecteur (4), un jet d'air refoulé (7) entraîné dans le canal de mélange poudre-air (2) par la buse d'injection (6) aspirant de la poudre (16) à partir d'un réservoir de poudre (14) à travers la chambre de dépression (10) et le canal d'aspiration de poudre (8) et la refoulant dans le canal de mélange poudre-air (2), caractérisé en ce que la zone de dépression (10, 26), formée par la chambre de dépression (10) et la portion extrême (26) du canal d'aspiration de poudre (8) qui y est reliée, est ou peut être reliée à l'atmosphère extérieure par un canal de mesure (30) qui est conçu sous la forme d'un moyen d'étranglement d'écoulement et à travers lequel la dépression de la zone de dépression (10, 26) peut aspirer, à partir de l'atmosphère extérieure (32), de l'air fortement étranglé, et en ce que le canal de mesure (30) est muni d'un dispositif de mesure (36) qui, en fonction de l'air atmosphérique extérieur parcourant le canal de mesure (30), produit un signal de mesure (38) qui correspond à la quantité de poudre refoulée par unité de temps, et en ce qu'au niveau du début amont (58) du canal d'aspiration de poudre (8) est prévue une entrée d'air de compensation (56) par laquelle de l'air comprimé est envoyé au canal d'aspiration de poudre (8) pour compenser les fluctuations de pression qui se produisent dans le canal d'aspiration de poudre (8) lors du fonctionnement, la quantité d'air de compensation fournie par unité de temps étant nettement inférieure à la quantité d'air refoulé par l'injecteur (4) par unité de temps.

2. Dispositif d'alimentation d'injecteur selon la revendication 1, caractérisé en ce que le dispositif de mesure (36) est un appareil de mesure d'écoulement qui produit le signal de mesure (38) en fonction de la quantité d'air parcourant le canal de mesure (30) par unité de temps.

3. Dispositif d'alimentation d'injecteur selon la revendication 1, caractérisé en ce que le dispositif de mesure (36) est un dispositif de mesure de chute de pression qui produit le signal de mesure (38) en fonction d'une chute de pression dans le canal de mesure (30).

4. Dispositif d'alimentation d'injecteur selon une des revendications précédentes, caractérisé en ce que le canal de mesure (30) est relié à la portion aval extrême (26) du canal d'aspiration de poudre (8) qui est en communication d'écoulement avec la chambre de dépression (10) et possède une section d'écoulement suffisamment grande pour qu'il y règne sensiblement la même dépression que dans la chambre de dépression (10).

5. Dispositif d'alimentation d'injecteur selon une des revendications précédentes, caractérisé en ce que l'entrée d'air de compensation (56) est formée par une seconde buse d'injection qui est orientée axialement vers l'aval au début (58) côté amont du canal d'aspiration de poudre (8) et à laquelle est associée une chambre de dépression (60) dans laquelle le courant d'air de compensation produit un léger vide qui empêche l'air de compensation de s'échapper au niveau du début amont (58) du canal d'aspiration de poudre (8).

6. Dispositif d'alimentation d'injecteur selon une des revendications précédentes, caractérisé en ce que le début amont (58) du canal d'aspiration de poudre (8) est pourvu d'au moins une ouverture d'entrée de poudre (68) qui s'étend transversalement à lui.

7. Dispositif d'alimentation d'injecteur selon la revendication 6, caractérisé en ce que l'ouverture d'entrée de poudre (68) et le début amont (58) du canal d'aspiration de poudre (8) sont en communication fluidique l'un avec l'autre par l'intermédiaire d'une chambre (60) formée entre l'entrée d'air de compensation (56) pour l'air de compensation et le canal d'aspiration de poudre (8).

8. Dispositif d'alimentation d'injecteur selon une des revendications précédentes, caractérisé en ce que le canal d'aspiration de poudre (8) est ménagé dans la direction longitudinale d'un tube plongeur (24) qui peut être plongé dans un réservoir de poudre (14) et dont l'extrémité supérieure est munie de l'injecteur (4).
